# EUROPÄISCHE PATENTSCHRIFT

(11) **EP 1 628 874 B1**
(45) Veröffentlichungstag und Bekanntmachung des Hinweises auf die Patenterteilung: **08.07.2009**
(21) Anmeldenummer: 04729630.6
(22) Anmeldetag: 27.04.2004
(51) Int. Cl.: B63B 43/00, A62C 3/10, G01C 21/22

(54) **GEFECHTSSCHÄDEN-KONTROLLEINRICHTUNG FÜR SCHIFFE**
BATTLE DAMAGE MONITORING DEVICE FOR BOATS
DISPOSITIF DE CONTROLE D'AVARIES DE COMBAT POUR BATEAUX

(30) Priorität: 30.05.2003 US 448224
(43) Veröffentlichungstag der Anmeldung: 01.03.2006
(73) Patentinhaber: SIEMENS AKTIENGESELLSCHAFT, 80333 München (DE)
(72) Erfinder: MÜLLER, Karl-Heinz, 27412 Tarmstedt (DE); SCHULZE, Matthias, 21335 Lüneburg (DE)
(86) Internationale Anmeldenummer: PCT/EP2004/004441
(87) Internationale Veröffentlichungsnummer: WO 2004/106152

(56) Entgegenhaltungen:
- DE-A- 4 333 060
- DE-A- 19 524 756
- DE-A- 19 636 853
- US-A- 4 482 845

## Beschreibung

Die Erfindung bezieht sich auf eine Gefechtsschäden-Kontrolleinrichtung für Schiffe zur Überwachung, Eindämmung und Beseitigung von Leckschäden, Feuerschäden und/oder ABC-Kontaminierungen nach Kollisionen, Grundberührungen, Waffeneinwirkungen etc., mit einem Automations- und Überwachungssystem für Anlagen-, Spannungs- und Aggregatausfälle, und einer Bedienstation, an der ein die Räume des Schiffes darstellender perspektivischer Schiffsplan anzeigbar ist.

Das Dokument DE 4333060, das als nächstliegen der Stand der Tecknik angesehen wird, offenbart eine Einrichtung der obengenannten Gattung.

Die Schadensabwehr, zu der die vorstehend geschilderte Gefechtsschäden-Kontrolleinrichtung eingesetzt wird, ist insbesondere hinsichtlich der Feuerbekämpfung überaus zeitkritisch. Beim derzeit eingesetzten Verfahren zum Aufbau eines Lagebildes kommt es vor, dass die von den mit Beobachtungsaufgaben beauftragten Rondengängern durchzuführenden Sofortmaßnahmen den Aufbau des Lagebildes in unerwünschter Weise verzögern. Des Weiteren entstehen Verzögerungen, wenn entdeckte Verletzte geborgen werden müssen.

Der Erfindung liegt die Aufgabe zugrunde, die eingangs geschilderte Gefechtsschäden-Kontrolleinrichtung für Schiffe derart weiterzubilden, dass die für die Einleitung von Maßnahmen zur Schadensabwehr erforderliche Erstellung eines Lagebildes schneller bewerkstelligt werden kann, so dass etwaig erforderliche Maßnahmen zur Schadenabwehr auf der Grundlage eines möglichst vollständigen und korrekten Lagebildes geplant werden können.

Diese Aufgabe wird erfindungsgemäß dadurch gelöst, dass in jedem Raum oder jeweils im Bereich einer Gruppe aus einigen einander zugeordneten Räumen des Schiffes ein Meldeelement angeordnet ist, das so mit der Gefechtsschäden-Kontrolleinrichtung zusammenwirkt, dass bei seinem Auslösen die Darstellung des entsprechenden Raumes bzw. der entsprechenden Gruppe aus einander zugeordneten Räumen im perspektivischen Schiffsplan einen Farbumschlag erfährt. Dieser Farbumschlag des betreffenden Schiffsraumes ermöglicht es dem Schiffssicherungsoffizier unmittelbar und ohne großen Aufwand zwischen denjenigen Bereichen des Schiffes zu unterscheiden, die bereits kontrolliert sind oder nicht. So ist es ihm beispielsweise ohne große Überlegungen möglich, in etwaig noch nicht kontrollierte Räume mit der Kontrolle beauftragte Extra-Rundengänger zu entsenden.

Der Farbumschlag am an der Bedienstation dargestellten perspektivischen Schiffsplan kann beispielsweise von einem 10%igen grau auf reinweiß stattfinden.

Die Meldeelemente können als Taster ausgebildet sein, die im Hauptzugangsbereich des jeweiligen Raumes bzw. der jeweiligen Gruppe von Räumen angeordnet sind.

Des Weiteren können die Meldeelemente auch als Näherungsschalter gestaltet werden, wobei in jedem Fall eine Sicherung gegen unbeabsichtigte Auslösung vorgesehen sein sollte.

Mit Temperatursensoren, die an bzw. in den Schottwänden zumindest der wichtigsten Betriebsräume des Schiffes, z.B. des Motorenraums, des Getrieberaums, des Gasturbinenraums, der Pumpenräume, der Kältemaschinenräume etc. angeordnet und deren Messwerte an der Bedienstation der Gefechtsschäden-Kontrolleinrichtung darstellbar sind, können zweckmäßigerweise exakte Angaben hinsichtlich der Temperaturverhältnisse in Schottwänden gemacht werden, die auch Schiffsräume begrenzen, in denen Brände festgestellt worden sind. Irgendwelche ungenauen Schätzmaßnahmen etc. können so entfallen.

Die Temperatursensoren sind vorteilhaft mit einem regelmäßigen, vorgebbaren Abstand zueinander in bzw. an den Schottwänden angeordnet, so dass ein möglichst genaues Temperaturprofil hinsichtlich der jeweiligen Schottwand erstellt werden kann.

Vorteilhaft ist an der Bedienstation der Temperaturverlauf zwischen den Temperatursensoren mittels Interpolation od.dgl. ermittelbar.

Wenn zu der Gefechtsschäden-Kontrolleinrichtung Registriereinrichtungen gehören, die in den Hauptzugängen zumindest der Hauptbetriebsräume des Schiffes angeordnet sind, mittels denen der Eintritt einer Person in diesen Hauptbetriebsraum und der Austritt einer Person aus diesem Hauptbetriebsraum erfassbar und die jeweils aktuelle Hauptbetriebsraumbesatzung an die Bedienstation weiterleitbar ist, kann sichergestellt werden, dass vor der Einleitung von Schadensbekämpfungsmaßnahmen, die u.U. für Menschen schädlich sind, hinsichtlich des Aufenthalts von Personen in dem betreffenden Raum exakte Informationen an der Bedienstation vorliegen.

Die Registriereinrichtungen können als Magnetkarten-Lesegeräte oder als Numerik-Tastaturen mit Display und Betätigungstasten ausgebildet sein. Letzteres ist sinnvoll, um auf Magnetkarten verzichten zu können. Im Falle der Numerik-Tastaturen gibt jede den betreffenden Raum betretende oder verlassende Person eine ihr ausschließlich zugeordnete Ziffernfolge ein.

Alternativ kann eine Elektronik vorgesehen sein, die an einer Person getragene Chips (PIK: Personal-Identifizierungskarte) automatisch erkennt.

Um den genauen Aufenthaltsort von Personen innerhalb eines Raums ermitteln zu können, ist es vorteilhaft, wenn zu der Gefechtsschäden-Kontrolleinrichtung Infrarotsensoren gehören, die im Deckenbereich zumindest der Hauptbetriebsräume des Schiffes angeordnet sind und mittels denen die Anzahl und der Aufenthaltsort von in dem betreffenden Hauptbetriebsraum befindlichen Personen erfass- und an die Bedienstation weiterleitbar sind.

Die Überwachung von für den Betrieb des Schiffes wichtigen Räumen wird darüber hinaus mittels Infrarotkameras verbessert, die in Ecken zumindest der Hauptbetriebsräume des Schiffes angeordnet sind und mittels denen die Temperaturverhältnisse in dem betreffenden Hauptbetriebsraum erfass- und an die Bedienstation weiterleitbar sind.

Zur Erfassung der atmosphärischen Bedingungen in Räumen des Schiffes ist es vorteilhaft, wenn die Gefechtsschäden-Kontrolleinrichtung Gassensoren hat, die zumindest in den Hauptbetriebsräumen des Schiffes angeordnet sind und mittels denen Gas- und/oder Löschmittelkonzentrationen in den betreffenden Hauptbetriebsräumen erfass- und an die Bedienstation weiterleitbar sind.

Zur Reduzierung des Aufwands für die Verkabelung der Gefechtsschäden-Kontrolleinrichtung ist es zweckmäßig, wenn die Meldeelemente und/oder die Temperatursensoren und/oder die Registriereinrichtungen und/oder die Infrarotsensoren und/oder die Infrarotkameras und/oder die Gassensoren mittels Funkverbindung mit Datensammeleinheit kommunizieren, die ihrerseits an ein Info- und Datennetz der Gefechtsschäden-Kontrolleinrichtung angeschlossen sind.

Hierbei kann vorteilhaft je Schiffssicherungsbereich oder je Abteilung eine Datensammeleinheit vorgesehen sein, wodurch sich Vorteile hinsichtlich der Schiffssicherungsbereichs- bzw. der Abteilungsautorkie ergeben.

Der Datenverkehr lässt sich besser organisieren und darüber hinaus reduzieren, wenn die Meldeelemente und/oder die Temperatursensoren und/oder die Registriereinrichtungen und/oder die Infrarotsensoren und/oder die Infrarotkameras und/oder die Gassensoren eine Datenvorverarbeitung aufweisen, womit intelligente Einheiten bzw. Sensoren zum Einsatz kommen.

Zur Feuerabwehr erforderliche Löschmaßnahmen lassen sich besonders vorteilhaft mit fernsteuerbaren, stationären Feuerlöschanlagen durchführen, deren Einsatz bei bestimmungsgemäßem Betrieb der erfindungsgemäßen Gefechtsschäden-Kontrolleinrichtung ohne Gefahr für Besatzungsmitglieder möglich ist.

Mittels der in den Schottwänden vorgesehenen Temperatursensoren ist es auch möglich, Wasserstände od.dgl. in den betroffenen Räumen des Schiffes zu erfassen.

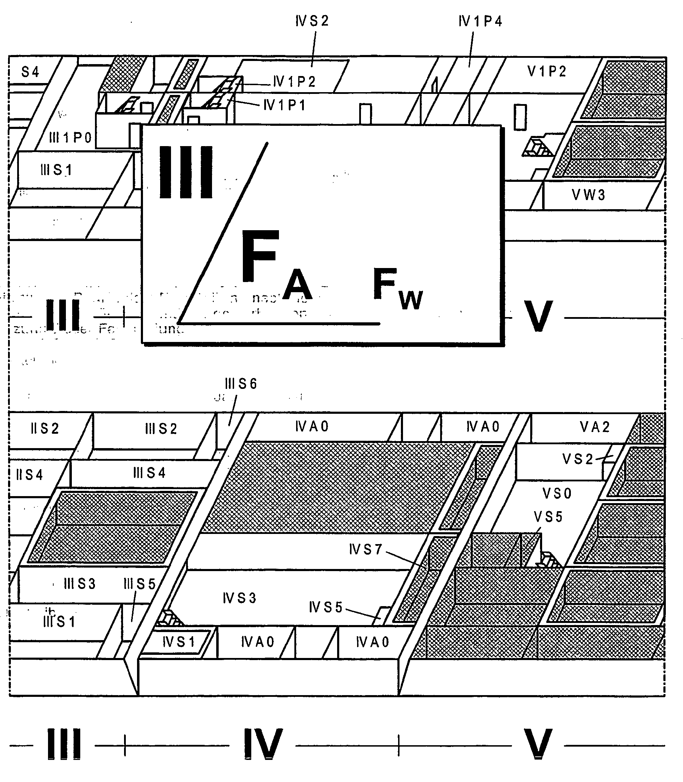

Im folgenden wird die Erfindung anhand einer Ausführungsform unter Bezugnahme auf die Zeichnung näher erläutert, deren einzige FIGUR einen Teil eines perspektivischen Schiffsplans zeigt, wie er bei der erfindungsgemäßen Gefechtsschäden-Kontrolleinrichtung zum Einsatz kommt.

Eine erfindungsgemäße Gefechtsschäden-Kontrolleinrichtung dient u.a. der Überwachung, der Eindämmung und Beseitigung von Leckschäden, Feuerschäden und/oder ABC-Kontaminierungen nach Kollisionen, Grundberührungen, Waffeneinwirkungen etc..

Zu der Gefechtsschäden-Kontrolleinrichtung gehört ein Automations- und Überwachungssystem für Anlagen-, Spannungs- und Aggregatausfälle. An einer Bedienstation der erfindungsgemäßen Gefechtsschäden-Kontrolleinrichtung ist auf einem Bildschirm ein die Räume des Schiffes darstellender, perspektivischer Schiffsplan darstellbar, wie er teilweise in der einzigen FIGUR gezeigt ist.

Wird eine Erschütterung, eine Detonation bzw. ein Treffer an Bord eines Kriegsschiffes wahrgenommen, muss möglichst schnell die Schadenssituation des Kriegsschiffes erfasst werden. Einem Schiffsicherungsoffizier, der an der Bedienstation sich befindet, dient zur Feststellung und zum Festhalten der Schadenssituation des Schiffes der in der einzigen FIGUR teilweise dargestellte perspektivische Schiffsplan. Der Lageüberblick des Schiffsicherungsoffiziers wird im Falle der erfindungsgemäßen Gefechtsschäden-Kontrolleinrichtung erheblich dadurch verbessert, dass alle kontrollierten Räume des Schiffes von ihrer Einfärbung in dem Schiffsplan, wie er auf dem Bildschirm der Bedieninsel gezeigt ist, von 10%-grau auf reinweiß umgeschaltet werden. Hierdurch kann der Schiffssicherungsoffizier beispielsweise nach dem Ablauf eines dreibis fünfminütigen Zeitraums den Raumkontrollstatus sehr zielsicher beurteilen.

Um den Farbumschlag in der Darstellung des Schiffsplans zu bewerkstelligen, sind im Hauptzugangsbereich zu jedem Raum des Schiffes Taster angebracht. Wenn der betreffende Raum kontrolliert wird, wird dieser Taster zur Bestätigung der erfolgten Kontrolle und ggf. der Schadensfreiheit betätigt. Diese Taster werden als zusätzliche Messstellen in das Automations- und Überwachungssystem eingebunden und unmittelbar mit der Farbumschaltung der im perspektivischen Schiffsplan dargestellten Räume verknüpft.

Anstelle von Tastern können auch Näherungsschalter eingesetzt werden, wobei jedoch für alle möglichen technischen Lösungen ein unbeabsichtigtes Auslösen sicher ausgeschlossen wird.

Es ist auch möglich, dass ein Taster bzw. ein Näherungsschalter einer bestimmten Gruppe von in irgendeiner Form zusammengehörenden Räumen des Schiffes zugeordnet wird, wobei dann die Anzahl der insgesamt vorzusehenden und in das Automations- und Überwachungssystem einzubindenden Taster bzw. Näherungsschalter reduziert werden kann.

An bzw. in den Schottwänden zumindest der wichtigsten Betriebsräume des Kriegsschiffes, z.B. des Motorenraums, des Gasturbinenraums, des Getrieberaums, der Pumpenräume, der Kältemaschinenräume etc. sind in regelmäßigen Abständen Temperatursensoren angebracht. Die von diesen Temperatursensoren erfassten Temperaturwerte können in einem Extrabild auf einem Bildschirm der Bedieninsel der erfindungsgemäßen Gefechtsschäden-Kontrolleinrichtung dargestellt werden. Hierdurch wird die Temperaturüberwachung für den Schiffsicherungsoffizier bzw. die Schiffsführung erheblich erleichtert. Darüber hinaus sind die erfassten Temperaturwerte weitaus genauer wie diejenigen Temperaturwerte, die bei den bisher bekannten Verfahren zur Verfügung gestellt wurden.

Die Temperatursensoren sind hierbei so angeordnet, dass sie die Erfassung eines Temperaturprofils der betreffenden Schottwand zulassen. An der Bedienstation kann der Temperaturverlauf zwischen den einzelnen, zueinander beabstandeten Temperatursensoren mittels Interpolation oder vergleichbarer mathematischer Verfahren errechnet werden.

Die Temperatursensoren sind ebenfalls in das Automations- und Überwachungssystem der Gefechtsschäden-Kontrolleinrichtung eingebunden.

Um zu jedem Zeitpunkt möglichst genau über den Aufenthaltsort der Besatzungsmitglieder informiert zu sein, was insbesondere in Notzuständen etc. wichtig ist, sind an den Hauptzugängen zumindest der Hauptbetriebsräume des Schiffes, wie z.B. der Motorenräume, der Gasturbinenräume, der Pumpenräume, des E-lektrizitätswerkes etc. Magnetkarten-Lesegeräte oder Numerik-Tastaturen mit Display und Betätigungstasten angebracht. Wenn ein Besatzungsmitglied den entsprechenden Hauptbetriebsraum betritt, zieht er die ihm persönlich zugeordnete Magnetstreifenkarte durch das Magnetkarten-Lesegerät oder er gibt die ihm persönlich zugeordnete Ziffernkombination über die Numerik-Tastatur ein. Die Magnetkarten-Lesegeräte und die Numerik-Tastaturen sind in das Automations- und Überwachungssystem der Gefechtsschäden-Kontrolleinrichtung einbezogen.

Alternativ ist es möglich, eine Elektronik und an den einzelnen Personen der Besatzung getragene Chips (PIK: Personal-Identifizierungs-Karte) vorzusehen. Mittels der Elektronik sind dann die von den Personen getragenen Chips automatisch erkennbar; das entsprechende Prinzip wird z.B. beim Betrieb von Skiliftanlagen bereits eingesetzt.

Selbstverständlich lässt sich jedes Besatzungsmitglied, welches den entsprechenden Hauptbetriebsraum wieder verlässt, ausbuchen, indem es seine Magnetstreifenkarte wiederum durch das Magnetkarten-Lesegerät zieht oder die ihm persönlich zugeordnete Ziffernfolge wieder über die Numerik-Tastatur in das Automations- und Überwachungssystem eingibt.

Innerhalb des Automations- und Überwachungssystems wird für jeden Hauptbetriebsraum eine Personenliste geführt, aus der sich ergibt, wer zu einem bestimmten Zeitpunkt in dem betreffenden Hauptbetriebsraum sich befindet. Diese Personenliste ist an der Bedienstation jederzeit aufrufbar und präsent.

Um an der Bedieninsel bzw. im Automations- und Überwachungssystem weitergehende Informationen hinsichtlich des Aufenthaltsorts einzelner Besatzungsmitglieder innerhalb eines Hauptbetriebsraums zu erlangen, sind unter der Raumdecke zumindest der Hauptbetriebsräume Infrarotsensoren angebracht, die neben der Anzahl der sich im Hauptbetriebsraum befindenden Personen auch deren genauere Aufenthaltsorte innerhalb des Hauptbetriebsraums ermitteln und an das Automations- und Überwachungssystem weitermelden.

In den Ecken zumindest der Hauptbetriebsräume sind Infrarotkameras angebracht, deren Bild der Temperaturdarstellung im Automations- und Überwachungssystem bzw. an der Bedienstation überlagert wird. Hierdurch ergibt sich eine weiter verbesserte Entscheidungshilfe hinsichtlich der in dem Hauptbetriebsraum zu erwartenden Zustände. Das Personal, das für den Wiedereintritt nach Ablöschen eines Feuers in den betreffenden Raum mit einer stationären Feuerlöschanlage in den Raum vorgesehen ist, kann deutlich zielgerichteter eingewiesen und auf mögliche Gefahren in dem Raum hingewiesen werden.

Zumindest in den Hauptbetriebsräumen sind fernsteuerbare, stationäre Feuerlöschanlagen vorgesehen, mittels denen im Brandfall die betreffenden Hauptbetriebsräume indirekt ablöschbar sind. Diese stationären Feuerlöschanlagen beruhen beispielsweise auf Halon, CO₂, DAS (Druckschaumfeuerlöschanlage) etc. als Löschmedium. Vor dem Einsatz einer derartigen stationären Feuerlöschanlage muss anhand der im Automations- und Überwachungssystem vorhandenen Personenliste für den betreffenden Raum eindeutig klargestellt sein, dass die stationäre Feuerlöschanlage in Betrieb genommen werden kann. Das heißt, es muss eindeutig geklärt sein, dass keine Personen mehr in dem betreffenden Hauptbetriebsraum sind, da diese durch den Einsatz der unterschiedlichen Löschmedien gesundheitlich beeinträchtigt werden. In Sonderfällen könnten hier die Infrarotsensoren genauere Informationen hinsichtlich des u.U. noch möglichen Einsatzes der stationären Feuerlöschanlagen bieten, da mittels der Infrarotsensoren der genaue Aufenthaltsort etwaig noch innerhalb des zu löschenden Hauptbetriebsraums sich befindender Personen ermittelt werden kann.

Zur Überwachung der atmosphärischen Verhältnisse in brennenden bzw. in abgelöschten Räumen kommen Gassensoren zum Einsatz, mittels denen Gas- und/oder Löschmittelkonzentrationen in den betreffenden Räumen erfasst und an das Automations- und Überwachungssystem weitergeleitet werden. Mittels derartiger Gassensoren können die Verhältnisse innerhalb eines brennenden Raums aber auch die Verhältnisse nach einer Ablöschung in einem abgelöschten Raum überwacht werden. Sie können beispielsweise als Grundlage für die Entscheidung hinsichtlich einer Nach- bzw. Zweitbeflutung eines Raums mit Löschmitteln dienen. Darüber hinaus sind derartige Gassensoren auch geeignet, die atmosphärischen Verhältnisse in denjenigen Räumen des Schiffes zu überwachen, die einem brennenden Raum oder einem abgelöschten Raum benachbart sind. Das ist wichtig, da aufgrund etwaiger Baumängel Löschgase, z.B. CO₂, in benachbarte Abteilungen eingedrungen sein können.

Die vorstehend erwähnten Taster, Näherungsschalter, Temperatursensoren, Magnetkarten-Lesegeräte, Numerik-Tastaturen, Infrarotsensoren, Infrarotkameras und Gassensoren kommunizieren mittels Funkverbindung mit dem Automations- und Überwachungssystem, so dass Kabelverbindungen etc. minimiert werden können. In jedem Schiffssicherungsbereich bzw. in jeder Abteilung ist eine Datensammeleinheit vorgesehen, mit der die genannten Elemente kommunizieren können und von der aus die Daten dann an ein Informations- und Datennetz der Gefechtsschäden-Kontrolleinrichtung weitergegeben werden.

Um den Datenverkehr möglichst gering zu halten, sind die genannten Elemente mit einer Datenvorverarbeitung versehen.

## Patentansprüche

1. Gefechtsschäden-Kontrolleinrichtung zur Überwachung, Eindämmung und Beseitigung von Leckschäden, Feuerschäden und/oder ABC-Kontaminierungen nach Kollisionen, Grundberührungen, Waffeneinwirkungen etc., mit einem Automations- und Überwachungssystem für Anlagen-, Spannungs- und Aggregatausfälle, und einer Bedienstation, an der ein die Räume des Schiffes darstellender perspektivischer Schiffsplan aufzeigbar ist, **dadurch gekennzeichnet, dass** in jedem Raum oder jeweils im Bereich einer Gruppe aus einander zugeordneten Räumen des Schiffes ein Taster, der im Hauptzugangsbereich des jeweiligen Raums bzw. der jeweiligen Gruppe von Räumen angeordnet ist, oder ein gegen unbeabsichtigte Auslösung gesicherter Näherungsschalter angeordnet ist, wobei der Taster bzw. der Näherungsschalter so mit der Gefechtsschäden-Kontrolleinrichtung zusammenwirkt, dass bei seinem Auslösen die Darstellung des entsprechenden Raums bzw. der entsprechenden Gruppe aus einander zugeordneten Räumen im perspektivischen Schiffsplan einen Farbumschlag erfährt.

2. Gefechtsschäden-Kontrolleinrichtung nach Anspruch 1, bei dem der Farbumschlag am an der Bedienstation dargestellten perspektivischen Schiffsplan von einem 10%igen grau auf reinweiß stattfindet.

3. Gefechtsschäden-Kontrolleinrichtung nach Anspruch 1 oder 2, mit Temperatursensoren, die in bzw. an den Schottwänden zumindest der wichtigsten Betriebsräume des Schiffes, z.B. des Motorenraums, des Gasturbinenraums, des Getrieberaums, der Pumpenräume, der Kältemaschinenräume etc., angeordnet und deren Messwerte an der Bedienstation der Gefechtsschäden-Kontrolleinrichtung darstellbar sind.

4. Gefechtsschäden-Kontrolleinrichtung nach Anspruch 3, deren Temperatursensoren mit regelmäßigem, vorgebbaren Abstand zueinander in bzw. an den Schottwänden angeordnet sind.

5. Gefechtsschäden-Kontrolleinrichtung nach Anspruch 3 oder 4, an deren Bedienstation der Temperaturverlauf zwischen den Temperatursensoren mittels Interpolation od.dgl. ermittelbar ist.

6. Gefechtsschäden-Kontrolleinrichtung nach einem der Ansprüche 1 bis 5, zu der Registriereinrichtungen gehören, die in den Hauptzugängen zumindest der Hauptbetriebsräume des Schiffe angeordnet sind, mittels denen der Eintritt einer Person in diesen Hauptbetriebsraum und der Austritt einer Person aus diesem Hauptbetriebsraum erfassbar und die jeweils aktuelle Hauptbetriebsraumbesetzung an die Bedienstation weiterleitbar ist.

7. Gefechtsschäden-Kontrolleinrichtung nach Anspruch 6, bei der die Registriereinrichtungen als Magnetkarten-Lesegeräte ausgebildet sind.

8. Gefechtsschäden-Kontrolleinrichtung nach Anspruch 6, bei der die Registriereinrichtungen als Numerik-Tastaturen mit Display und Betätigungstasten ausgebildet sind.

9. Gefechtsschäden-Kontrolleinrichtung nach Anspruch 6, bei der die Registriereinrichtungen als Elektronik ausgebildet sind, mittels der an einer Person getragene Chips automatisch erkennbar sind.

10. Gefechtsschäden-Kontrolleinrichtung nach einem der Ansprüche 1 bis 9, mit Infrarotsensoren, die im Deckenbereich zumindest der Hauptbetriebsräume eines Schiffes angeordnet sind und mittels denen die Anzahl und der Aufenthaltsort von in dem betreffenden Hauptbetriebsraum befindlichen Personen erfass- und an die Bedienstation weiterleitbar sind.

11. Gefechtsschäden-Kontrolleinrichtung nach einem der Ansprüche 1 bis 10, mit Infrarotkameras, die in Ecken zumindest der Hauptbetriebsräume des Schiffes angeordnet sind und mittels denen die Temperaturverhältnisse in dem betreffenden Hauptbetriebsraum erfass- und an die Bedienstation weiterleitbar sind.

12. Gefechtsschäden-Kontrolleinrichtung nach einem der Ansprüche 1 bis 11, mit Gassensoren, die zumindest in den Hauptbetriebsräumen des Schiffes angeordnet sind und mittels denen Gas- und/oder Löschmittelkonzentrationen in den betreffenden Hauptbetriebsräumen erfass- und an die Bedienstation weiterleitbar sind.

13. Gefechtsschäden-Kontrolleinrichtung nach einem der Ansprüche 1 bis 12, deren Meldeelemente und/oder Temperatursensoren und/oder Registriereinrichtungen und/oder Infrarotsensoren und/oder Infrarotkameras und/oder Gassensoren mittels Funkverbindung mit Datensammeleinheiten kommunizieren, die ihrerseits an ein Informations- und Datennetz der Gefechtsschäden-Kontrolleinrichtung angeschlossen sind.

14. Gefechtsschäden-Kontrolleinrichtung nach einem oder Ansprüche 1 bis 13, deren Meldeelemente und/oder Temperatursensoren und/oder Registriereinrichtungen und/oder Infrarotsensoren und/oder Infrarotkameras und/oder Gassensoren eine Datenvorverarbeitung aufweisen.

15. Gefechtsschäden-Kontrolleinrichtung nach Anspruch 13 oder 14, bei der je Schiffssicherungsbereich oder je Abteilung eine Datensammeleinheit vorgesehen ist.

16. Gefechtsschäden-Kontrolleinrichtung nach einem der Ansprüche 1 bis 15, mit fernsteuerbaren, stationären Feuerlöschanlagen.

## Claims

1. Battle damage control device for monitoring, suppressing and eliminating leakage damage, fire damage and/or NBC contamination after collisions, ground contacts, weapon effects etc., having an automation and monitoring system for installation, voltage and equipment failures, and having a control station on which a perspective plan of the marine vessel, illustrating the spaces in the marine vessel, can be displayed, **characterized in that** a pushbutton, which is arranged in the main access area of the respective space or the respective group of spaces, or a proximity switch which is protected against inadvertent tripping, is arranged in each space or in each case in the area of a group of mutually associated spaces in the marine vessel, with the pushbutton or the proximity switch interacting with the battle damage control device such that, when it is tripped, the display of the corresponding space or the corresponding group of mutually associated spaces changes colour in the perspective plan of the marine vessel.

2. Battle damage control device according to Claim 1, in which the colour change on the perspective plan of the marine vessel displayed at the control station changes from 10% grey to pure white.

3. Battle damage control device according to Claim 1 or 2, having temperature sensors which are arranged in or on the compartment walls of at least the most important operating spaces in the marine vessel, for example the engine space, the gas-turbine space, the gear space, the pump spaces, the refrigeration machine spaces, etc., and their measured values can be displayed on the control station of the battle damage control device.

4. Battle damage control device according to Claim 3, whose temperature sensors are arranged at a regular, predeterminable distance from one another in or on the compartment walls.

5. Battle damage control device according to Claim 3 or 4, at whose control station the temperature profile between the temperature sensors can be determined by means of interpolation or the like.

6. Battle damage control device according to one of Claims 1 to 5, which includes registration devices which are arranged in the main accesses of at least the main operating spaces of the marine vessel, by means of which the entry of a person into this main operating space and the exit of a person from this main operating space can be detected, and the respective current main operating space occupancy can be passed on to the control station.

7. Battle damage control device according to Claim 6, in which the registration devices are in the form of magnetic card readers.

8. Battle damage control device according to Claim 6, in which the registration devices are in the form of numeric keyboards with a display and operating keys.

9. Battle damage control device according to Claim 6, in which the registration devices are in the form of electronics, by means of which chips worn by a person can be identified automatically.

10. Battle damage control device according to one of Claims 1 to 9, having infrared sensors which are arranged in the deck head area of at least the main operating spaces of a marine vessel and by means of which the number and the location of personnel located in the relevant main operating space can be detected and can be passed on to the control station.

11. Battle damage control device according to one of Claims 1 to 10, having infrared cameras which are arranged in corners of at least the main operating spaces of the marine vessel, and by means of which the temperature conditions in the relevant main operating space can be detected and can be passed on to the control station.

12. Battle damage control device according to one of Claims 1 to 11, having gas sensors which are arranged at least in the main operating spaces of the marine vessel and by means of which gas and/or solvent concentrations in the relevant main operating spaces can be detected and can be passed on to the control station.

13. Battle damage control device according to one of Claims 1 to 12, whose signalling elements and/or temperature sensors and/or registration devices and/or infrared sensors and/or infrared cameras and/or gas sensors communicate by means of a radio link with data gathering units, which are themselves connected to an information and data network of the battle damage control device.

14. Battle damage control device according to one of Claims 1 to 13, whose signalling elements and/or temperature sensors and/or registration devices and/or infrared sensors and/or infrared cameras and/or gas sensors have data preprocessing.

15. Battle damage control device according to Claim 13 or 14, in which a data gathering unit is provided for each marine vessel safety area or each compartment.

16. Battle damage control device according to one of Claims 1 to 15, having stationary fire extinguishing installations which can be controlled remotely.

## Revendications

1. Dispositif de contrôle d'avaries de combat pour surveiller, endiguer et éliminer des avaries par fuite, des avaries par incendie et/ou des contaminations ABC après des collisions, après avoir touché le fond, après avoir subi les effets d'arme, etc., comprenant un système d'automatisation et de surveillance de pannes d'installations, de tension et de groupes et un poste de service, auquel un plan du bateau en perspective, représentant les chambres du bateau, peut être affiché, **caractérisé en ce que,** dans chaque chambre ou respectivement dans la zone d'un groupe de chambres du bateau associées les une aux autres, est disposé un bouton poussoir qui est disposé dans la partie d'accès principal de la chambre respective ou du groupe respectif de chambres ou un interrupteur de proximité à l'épreuve d'un déclenchement non délibéré, le bouton-poussoir ou l'interrupteur de proximité coopérant avec le dispositif de contrôle d'avaries de combat de sorte que, lorsqu'il est déclenché, la représentation de la chambre correspondante ou du groupe correspondant de chambres associées les unes aux autres subit un changement de couleur dans le plan du bateau en perspective.

2. Dispositif de contrôle d'avaries de combat suivant la revendication 1, dans lequel le changement de couleur sur le plan du bateau en perspective représenté au poste de service a lieu d'un gris de 10 % au blanc pur.

3. Dispositif de contrôle d'avaries de combat suivant la revendication 1 ou 2, ayant des capteurs de température qui sont disposés dans ou sur les cloisons d'au moins les chambres de fonctionnement les plus importantes du bateau, par exemple la chambre des moteurs, la chambre des turbines à gaz, la chambre des transmissions, les chambres des pompes, les chambres de machines frigorifiques, etc. et dont les valeurs de mesure peuvent être représentées sur le poste de service du dispositif de contrôle et d'avaries de combat.

4. Dispositif de contrôle d'avaries de combat suivant la revendication 3, dont les capteurs de température sont disposés entre eux à intervalles réguliers et pouvant être prescrits dans ou sur les cloisons.

5. Dispositif de contrôle d'avaries de combat suivant la revendication 3 ou 4, au poste de service duquel la courbe de température entre les capteurs de température peut être déterminée au moyen d'une interpolation ou analogue.

6. Dispositif de contrôle d'avaries de combat suivant l'une des revendications 1 à 5, dont font partie des dispositifs d'enregistrement, qui sont disposés dans les accès principaux au moins des chambres principales de fonctionnement du bateau, dispositifs au moyen desquels l'entrée d'une personne dans cette chambre principale pour le fonctionnement et la sortie d'une personne de cette chambre principale pour le fonctionnement peuvent être détectées et qui peuvent transmettre au poste de service l'état d'occupation instantanée de la chambre principale de fonctionnement.

7. Dispositif de contrôle d'avaries de combat suivant la revendication 6, dans lequel les dispositifs d'enregistrement sont constitués sous la forme d'appareils de lecture à carte magnétique.

8. Dispositif de contrôle d'avaries de combat suivant la revendication 6, dans lequel les dispositifs d'enregistrement sont constitués sous la forme de claviers numériques à affichage et touches d'actionnement.

9. Dispositif de contrôle d'avaries de combat suivant la revendication 6, dans lequel les dispositifs d'enregistrement sont constitués sous la forme d'une électronique au moyen de laquelle des puces portées par une personne peuvent être détectées automatiquement.

10. Dispositif de contrôle d'avaries de combat suivant l'une des revendications 1 à 9, comprenant des capteurs infrarouges qui sont disposés dans la zone de plafond au moins des chambres principales de fonctionnement d'un bateau et au moyen desquels on peut détecter et transmettre au poste de service le nombre et l'emplacement où elles se tiennent de personnes se trouvant dans la chambre principale de fonctionnement concernée.

11. Dispositif de contrôle d'avaries de combat suivant l'une des revendications 1 à 10, comprenant des caméras infrarouges qui sont disposées dans des coins d'au moins les chambres principales de fonctionnement du bateau et au moyen desquelles on peut détecter et transmettre au poste de service les conditions de température dans la chambre principale de fonctionnement concernée.

12. Dispositif de contrôle d'avaries de combat suivant l'une des revendications 1 à 11, comprenant des capteurs de gaz, qui sont disposés au moins dans les chambres principales de fonctionnement du bateau et au moyen desquels on peut détecter et transmettre au poste de service les concentrations en gaz et/ou en agent d'extinction dans les chambres principales de fonctionnement concernées.

13. Dispositif de contrôle d'avaries de combat suivant l'une des revendications 1 à 12, dont des éléments d'indication et/ou des capteurs de température et/ou des dispositifs d'enregistrement et/ou des capteurs infrarouges et/ou des caméras infrarouges et/ou des capteurs de gaz communiquent au moyen d'une liaison radio avec des unités de collecte de données qui, pour leur part, sont raccordées à un réseau d'information et de données du dispositif de contrôle d'avaries de combat.

14. Dispositif de contrôle d'avaries de combat suivant l'une des revendications 1 à 12, dont des éléments d'indication et/ou des capteurs de température et/ou des dispositifs d'enregistrement et/ou des capteurs infrarouges et/ou des caméras infrarouges et/ou des capteurs de gaz ont un prétraitement de données.

15. Dispositif de contrôle d'avaries de combat suivant la revendication 13 ou 14, dans lequel une unité de collecte de données est prévue pour chaque domaine de sécurité du bateau ou pour chaque compartiment.

16. Dispositif de contrôle d'avaries de combat suivant l'une des revendications 1 à 15, ayant des installations d'extinction d'incendie fixes et pouvant être télécommandées.
